# EUROPEAN PATENT APPLICATION

(11) **EP 4 286 686 A1**
(43) Date of publication of application: **06.12.2023**
(21) Application number: 23176750.0
(22) Date of filing: 01.06.2023
(51) Int. Cl.: F03G 7/06, B29C 70/34, B29C 33/38, B29C 70/46, B64C 7/02, B64D 29/00, F01D 21/04, F02C 7/04, B29C 33/00, B29C 33/30, B29C 33/42, B29C 53/82, B29L 31/30

(54) **SMART MATERIALS TO FORM NACELLE CORE STRUCTURE**

(30) Priority: 03.06.2022 US 202217832492
(71) Applicant: Rohr, Inc., Chula Vista, CA 91910-2098 (US)
(72) Inventor: PEREZ, Artemio, Carpentersville (US)
(74) Representative: Dehns

(57) **Abstract**

A smart materials system (200) includes a first tool (202) configured to respond to an external stimulus, a second tool (204) configured to respond to the external stimulus, and a core layer (206) disposed between the first tool and the second tool such that the core layer is deformed when the first tool and the second tool respond to the external stimulus.

## Description

### FIELD

The present disclosure relates generally to gas turbine engines and, more particularly, to gas turbine engine manufacturing systems having smart materials to form a nacelle structure.

### BACKGROUND

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor section and the turbine section may include alternating series of rotating blades and stationary vanes that extend into a core flow path of the gas turbine engine. For example, the compressor section, the combustor section and the turbine section may comprise a core engine arranged within a nacelle core structure. However, the manufacture of the nacelle core structure is a time consuming and arduous process.

### SUMMARY

A smart materials system is described herein. The smart materials system includes a first tool configured to respond to an external stimulus, a second tool configured to respond to the external stimulus, and a core layer disposed between the first tool and the second tool such that the core layer is deformed when the first tool and the second tool respond to the external stimulus.

In various embodiments, the first tool and the second tool are configured to shape a component of an aircraft.

In various embodiments, the component of the aircraft is a nacelle core structure.

In various embodiments, the first tool and the second tool comprise at least one of a shape-memory alloys, shape-memory polymer, a piezoelectric material, a photomechanical material, or an electroactive polymer.

In various embodiments, the external stimulus is at least one of voltage, current, heat, electric field, or light.

In various embodiments, the first tool extends parallel to the second tool.

In various embodiments, the core layer is disposed between the first tool and the second tool in its uncured condition.

In various embodiments, the core layer is temporarily adhered to the first tool.

A method of forming a nacelle core structure is described herein. The method includes positioning a core layer between a first tool and a second tool, applying an external stimuli to the first tool and the second tool, and in response to applying the external stimulus, reshaping the first tool and the second tool such that the core layer is deformed to match the shape of the first tool and the second tool.

In various embodiments, the method further includes curing the core layer.

In various embodiments, the method further includes removing the first and second tool from the core layer.

In various embodiments, the first tool and the second tool are configured to shape a component of an aircraft.

In various embodiments, the component of the aircraft is a nacelle core structure.

In various embodiments, the first tool and the second tool comprise at least one of a shape-memory alloys, shape-memory polymer, a piezoelectric material, a photomechanical material, or an electroactive polymer.

In various embodiments, the external stimulus is at least one of voltage, current, heat, electric field, or light.

In various embodiments, the external stimulus applies a voltage to the first and second tools until the voltage reaches a threshold voltage.

In various embodiments, the external stimulus applies a voltage to the first and second tools for a predetermined duration of time.

In various embodiments, the first tool extends parallel to the second tool.

In various embodiments, the core layer is disposed between the first tool and the second tool in its uncured condition.

In various embodiments, the method further includes comprising temporarily adhering the core layer to the first tool.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 is a schematic sectional illustration of a gas turbine engine, in accordance with various embodiments;
FIGS. 2A-2C are schematics of a smart materials system, in accordance with various embodiments;
FIG. 3 illustrates a method of forming a nacelle core structure, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

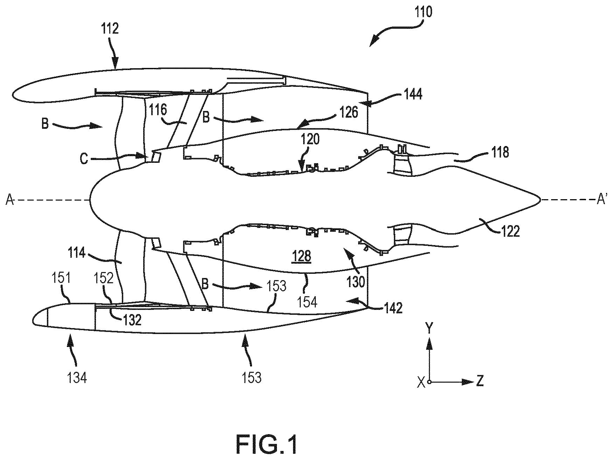

FIG. 1 illustrates a schematic view of a gas turbine engine, in accordance with various embodiments. Xyz-axes are provided for ease of illustration. Gas turbine engine 110 may include core engine 120. Core air flow C flows through core engine 120 and is expelled through exhaust outlet 118 surrounding tail cone 122.

Core engine 120 drives a fan 114 arranged in a bypass flow path B. Air in bypass flow-path B flows in the aft direction (z-direction) along bypass flow-path B. At least a portion of bypass flow path B may be defined by nacelle 112 and inner fixed structure (IFS) 126. Fan case 132 may surround fan 114. Fan case 132 may be housed within fan nacelle 112. Fan 114 may rotate about an engine centerline axis A-A'.

Nacelle 112 typically comprises two halves which are typically mounted to a pylon of an aircraft. According to various embodiments, multiple guide vanes 116 may extend radially between core engine 120 and fan case 132. Upper bifurcation 144 and lower bifurcation 142 may extend radially between the nacelle 112 and IFS 126 in locations opposite one another to accommodate engine components such as wires and fluids, for example.

Inner fixed structure 126 surrounds core engine 120 and provides core compartments 128. Various components may be provided in core compartment 128 such as fluid conduits and/or compressed air ducts, for example.

In various embodiments, various surfaces of gas turbine engine 110 may be treated with acoustic skins (also referred to as acoustic liners or perforated skins). For example, an acoustic skin 151 may be located at an inner flow surface of the nacelle inlet, in various embodiments; an acoustic skin 152 may be located at an inner flow surface of the fan case 132, in various embodiments; an acoustic skin 152 may be located at an inner flow surface of the thrust reverser (e.g., at least partially defining the bypass flow path B), in various embodiments; and an acoustic skin 154 may be located at a flow surface of the inner fixed structure 126 (e.g., at least partially defining the bypass flow path B). Moreover, other portions of the gas turbine engine 110 may be treated with acoustic skins.

It should be understood that, although described in connection with a gas turbine engine, dehumidifier systems of the present disclosure may be used in connection with acoustic skins (or liners) associated with other types of engines or other parts of an aircraft, and are not limited to gas turbine engines.

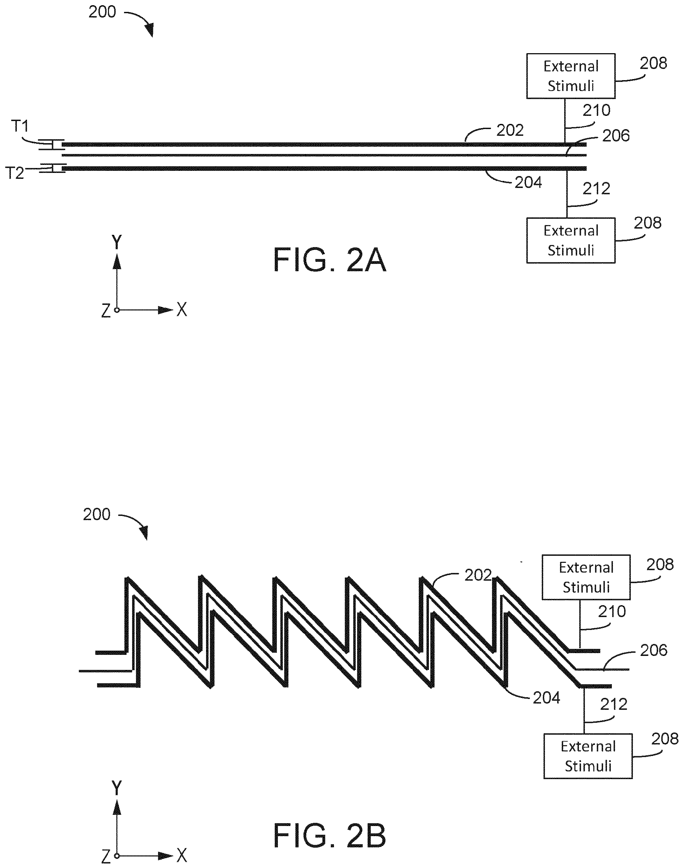

According to various embodiments and with reference to FIGS. 2A-2C, a smart materials system 200 is illustrated. Smart materials system 200 may be configured to shape a component of an aircraft. The component of the aircraft may be a nacelle core structure (e.g., nacelle 112), and inner fixed structure (e.g., inner fixed structure (IFS) 126), and a fan cowl (e.g., fan case 132).

Smart materials system 200 may include a first tool 202 (e.g., a first smart materials layer). For example, the first tool 202 may be a shape-memory alloy, a shape-memory polymer, a piezoelectric material, a photomechanical material, or an electroactive polymer. Smart materials system 200 may include a second tool 204 (e.g., a second smart materials layer). For example, the second tool 204 may be a shape-memory alloys, shape-memory polymer, a piezoelectric material, a photomechanical material, or an electroactive polymer.

In various embodiments, the first tool 202 and the second tool 204 are the same smart material. In various embodiments, the first tool 202 and the second tool 204 may be different smart materials. For instance, the first tool 202 may be a shape-memory alloy and the second tool 204 may be a shape-memory polymer. The first tool 202 defines a first layer thickness T1. The second tool 204 defines a second layer thickness T2. In various embodiments, the first layer thickness T1 and the second layer thickness T2 may be substantially the same.

Smart materials system 200 extends laterally within an x-y plane defined by an x-axis and a y-axis[illustrate]. For ease of illustration, the x-y plane is shown generally as a flat plane with smart materials system 200 extending horizontally along the x-axis. The first tool 202 and the second tool 204 of the smart materials system 200 may extend parallel to each other. In various embodiments, the smart materials system 200 may comprise one of a curved geometry, a compound-curved geometry, an angular geometry, an undulating geometry, and/or any other suitable geometry. Therefore, the smart materials system 200 may describe closed or open structures of a cylindrical, conical, frustoconical, rectilinear, prismatic, and/or other suitable geometry.

The first and second tools 202, 204 may be configured to take on the shape of the component of the aircraft. The shape of the aircraft component may be programed into the "memory" of the first and second tools 202, 204. For instance, a 3D printer may apply varied layers of a smart material onto a pre-stretched fabric. The printed smart materials transform themselves into pre-programmed shapes. Further, the smart materials are structured to respond to an external stimulus. Accordingly, the smart material is programmed to behave, or replicate a certain shape, when activated by the external stimulus.

The external stimulus may be at least one of a voltage, an electric field, heat, light, etc. For instance, piezoelectric materials can convert mechanical energy into electrical energy and vice versa. For example, the external stimulus may be an electrical impulse to trigger a shape change or a mechanical stress which causes the smart material to produce an electrical charge. Further, shape memory materials change shape when exposed to a heat source or a current source, for instance. Magnetorheological materials may change shape or other properties when exposed to a magnetic field.

Referring still to FIGS. 2A-2C, smart materials system 200 further comprises an external stimulus 208. As described herein, the external stimulus 208 may be a voltage source. In various embodiments, the external stimulus 208 may comprise a current source. In various embodiments, the external stimulus 208 may be a heat source. The external stimulus 208 may be applied to the first tool 202 and the second tool 204. For instance, as illustrated, the external stimulus 208 as a voltage source may be in electronic communication with the first and second tools 202, 204.

The first tool 202 and the second tool 204 are configured to respond to the external stimulus 208 (as the external stimulus is either applied or removed) and take the shape of the aircraft component (e.g., nacelle core structure 112) each tool was preprogrammed to form. For instance, lead 210 may be coupled to (e.g., in electronic communication with) the first tool 202 and lead 212 may be coupled to the second tool 202 such that when the voltage source is set to a threshold voltage, the first tool 202 and second tool 204 react and transform into the preprogramed shape. In various embodiments wherein the external stimulus 208 is a heat source, the first tool 202 and the second tool 204 react when exposed to a threshold temperature. The threshold voltage and the threshold temperature may vary depending on the characteristics of the smart material that the first and second tools 202, 204 comprise.

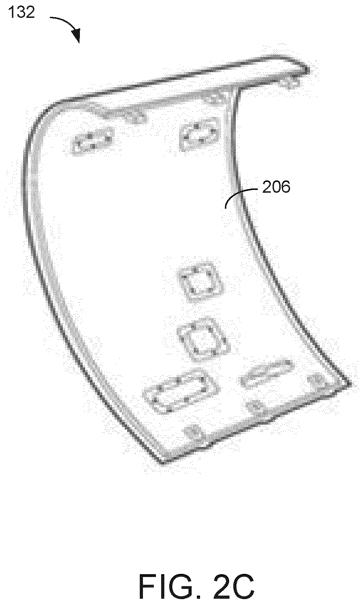

Using smart materials (e.g., shape-memory alloys) as a smart material tool can facilitate the production of a core structure (e.g., the nacelle 112). For instance, the smart materials tool may be used as a "mold" to shape a malleable material forming the aircraft component. Accordingly, smart materials system 200 comprises a core layer 206. The core layer 206 may be configured to be formed as the nacelle 112, for instance. In various embodiments, the core layer 206 may be configured to be formed as the fan case 132 (e.g., fan cowl for a nacelle of an aircraft propulsion system, see FIG. 2C). In various embodiments, the core layer 206 may be configured to be formed as a thrust reverser, an exhaust cone, and exhaust nozzle, a pylon/strut, etc. The core layer 206 may be an N-core material (e.g., a carbon composite) or any core material that is malleable. For instance, the core layer 206 may include a carbon fabric reinforcement impregnated with an epoxy resin, or a polymer matrix; e.g., thermoset material or thermoplastic material. Alternatively, the core layer 206 may be unimpregnated (e.g., only include a fibrous material). In various embodiment, the core layer 206 may be formed from a polymer material without fiber-reinforcement; e.g., a thermoplastic sheet.

In its uncured condition, the core layer 206 may be disposed between the first tool 202 and the second tool 204 such that the core layer 206 is sandwiched by and extending between the first tool 202 and the second tool 204. In various embodiments, wherein the smart materials system 200 comprises only the first tool 202, the core layer 206 is disposed on a surface of the first tool 202. The core layer 206 may extend parallel to the first and/or second tool 202, 204.

In various embodiments, the core layer 206 may be temporarily adhered or otherwise bonded to at least one of the first tool 202 and the second tool 204. In various embodiments, the core layer 206 may be mechanically fastened to at least one of the first tool 202 and the second tool 204. In various embodiments, the core layer 206 is positioned between the first tool 202 and the second tool 204 but is not coupled to either of the first tool 202 and the second tool 204.

With the core layer 206 positioned between the first and second tools 202, 204 (see FIG. 2A) the external stimulus 208 may be applied. After the external stimulus 208 applied the threshold voltage for a predetermined duration of time, the first and second tools 202, 204 may take the shape of the preprogrammed shape. As the first and second tools 202, 204 reshape themselves to the memorized structure in response to the external stimulus 208, the core layer 206 is similarly deformed (see FIG. 2B). While positioned between the first and second tools 202, 204, the entire smart materials system 200 may then be passed through a resin curing furnace in order to cure the core layer 206. The curing heat (e.g., supply of hot air) converts the liquid (or semi-liquid) resin to a solid resin which bonds the layer of reinforcement fiber. In various embodiments, the heat generated between the first and second tools 202, 204 from the external stimulus 208 may be sufficient to cure the core layer 206. In various embodiments, the smart materials system 200 may be exposed to UV light to cure the core layer 206. In various embodiments, both heat and pressure may be applied to the smart materials system 200 to cure the core layer 206. Thus, in various embodiments wherein the first and second tools 202, 204 are configured to take the shape of a nacelle core structure, the core layer 206 is shaped into a nacelle core structure to match that of the smart material tool shape.

Once the core layer 206 has cured and hardened, the first and second tools 202, 204 may be removed. Accordingly, the component of the aircraft is formed (e.g., see FIG. 2C). The first and second tools 202, 204 may then be used to create multiple aircraft components. Via the use of a smart material tool, the manual labor typically associated with creating/shaping the core structure may be reduced and thus directly reducing the production time of the entire core structure.

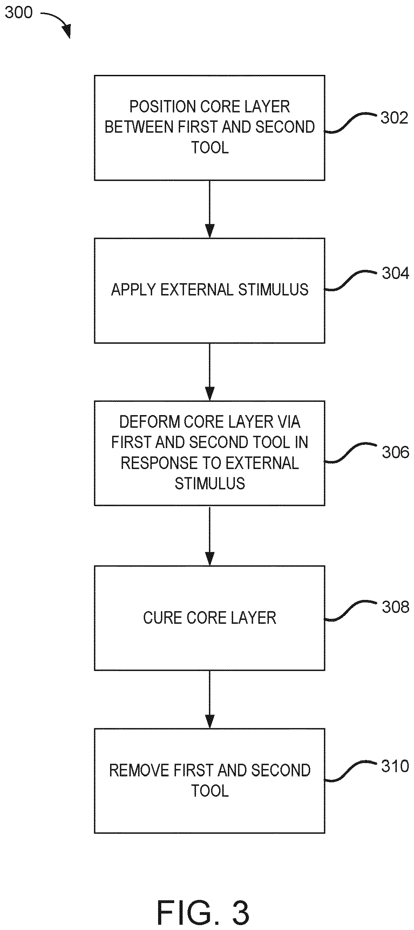

Referring now to FIG. 3, a method 300 of forming a nacelle core structure is illustrated, in accordance with various embodiments. At 302, the method includes positioning the core layer 206 between the first tool 202 and the second tool 204. The core layer 206 may be any malleable core material suitable for a nacelle core structure, such as core nacelle 64. The core layer 206 may be in its uncured condition. The first and second tools 202, 204 may be at least one of shape-memory alloys, shape-memory polymers, piezoelectric materials, photomechanical materials, electroactive polymers, etc. With the core layer 206 positioned between the first and second layers 202, 204, an external stimuli is applied at 304. In response to the applied external stimulus, the first and second tools 202, 204 are reshaped. Accordingly, at 306 the core layer 206 is deformed to match that of the first and second tools 202, 204. At 308, the core layer 206 is cured. As described herein, the curing process may include passing the smart materials system 200 through a resin curing furnace. Once the core layer 206 is cured and hardened, the first and second tools 202, 204 may be removed at 210. Thus, the nacelle core structure 64 is shaped. The first and second tools 202, 204 may be removed, producing a nacelle core structure for an aircraft.

In various embodiments, the external stimuli is removed at 304, resulting in the same response by the first and second tools 202, 204 at 306. For instance, the external stimulus may be applied while the core layer 206 is being positioned such that the first and second tools 202, 204 remain neutral (e.g., flat, unresponsive, etc.) until the external stimulus is removed, at which point the first and second tools 202, 204 return to the learned structured.

In various embodiments, the method 300 includes step 301 to train the first and second tools 202, 204. At 301, external stimulus is repeatedly applied to the first tool 202 and/or the second tool 204, depending on how many smart material tools are being used. By repeatedly applying an external stimulus, the first and second tools 202, 204 may learn to take the shape of a repetitive feature or entire structure in its "memory". For instance, the first tool 202 and the second tool 204 may be shaped against a mold of the target aircraft component. Then, once it has a memory of the shape, the first and second tools 202, 204 may be used to shape numerous core materials without the need to manually shape and/or remeasure each structure.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A smart materials system comprising:
a first tool configured to respond to an external stimulus;
a second tool configured to respond to the external stimulus; and
a core layer disposed between the first tool and the second tool such that the core layer is deformed when the first tool and the second tool respond to the external stimulus.

2. The smart materials system of claim 1, wherein the first tool and the second tool are configured to shape a component of an aircraft.

3. The smart materials system of claim 2, wherein the component of the aircraft is a nacelle core structure.

4. The smart materials system of any preceding claim, wherein the first tool and the second tool comprise at least one of a shape-memory alloys, shape-memory polymer, a piezoelectric material, a photomechanical material, or an electroactive polymer.

5. The smart materials system of any preceding claim, wherein the external stimulus is at least one of voltage, current, heat, electric field, or light, and/or,
wherein the first tool extends parallel to the second tool.

6. The smart materials system of any preceding claim, wherein the core layer is disposed between the first tool and the second tool in its uncured condition, and/or,
wherein the core layer is temporarily adhered to the first tool.

7. A method of forming a nacelle core structure, the method comprising:
positioning a core layer between a first tool and a second tool;
applying an external stimulus to the first tool and the second tool; and
in response to applying the external stimulus, reshaping the first tool and the second tool such that the core layer is deformed to match a shape of the first tool and the second tool.

8. The method of claim 7, further comprising curing the core layer.

9. The method of claim 8, further comprising removing the first and second tool from the core layer.

10. The method of any of claims 7 to 9, wherein the first tool and the second tool are configured to shape a component of an aircraft.

11. The method of claim 10, wherein the component of the aircraft is a nacelle core structure.

12. The method of any of claims 7 to 11, wherein the first tool and the second tool comprise at least one of a shape-memory alloys, shape-memory polymer, a piezoelectric material, a photomechanical material, or an electroactive polymer.

13. The method of any of claims 7 to 12, wherein the external stimulus is at least one of voltage, current, heat, electric field, or light, and/or,
wherein the external stimulus applies a voltage to the first and second tools until the voltage reaches a threshold voltage.

14. The method of any of claim 7 to 13, wherein the external stimulus applies a voltage to the first and second tools for a predetermined duration of time, and/or,
wherein the first tool extends parallel to the second tool.

15. The method of any of claims 7 to 14, wherein the core layer is disposed between the first tool and the second tool in its uncured condition, and/or,
further comprising temporarily adhering the core layer to the first tool.
